# EUROPÄISCHE PATENTSCHRIFT

(11) **EP 3 840 899 B1**
(45) Veröffentlichungstag und Bekanntmachung des Hinweises auf die Patenterteilung: **19.08.2026**
(21) Anmeldenummer: 19745117.2
(22) Anmeldetag: 24.07.2019
(51) Int. Cl.: B21J 15/02, B21J 15/10, B21J 15/36

(54) **ADAPTERELEMENT FUER EINE ANBRINGUNG EINES MATRIZENHALTERS AN EINE WERKZEUGZANGE**
ADAPTER FOR MOUNTING A DIE HOLDER ON A TOOL PLIER
ADAPTATEUR POUR LA FIXATION D'UN PORTE-MATRICE SUR UNE PINCE D'OUTIL

(30) Priorität: 22.08.2018 DE 102018120500
(43) Veröffentlichungstag der Anmeldung: 30.06.2021
(73) Patentinhaber: Tox Pressotechnik GmbH & Co. KG, 88250 Weingarten (DE)
(72) Erfinder: SOMMER, Sascha, 72517 Sigmaringendorf (DE); BADENT, Michael, 88250 Weingarten (DE); SOLLNER, Juergen, 88239 Wangen (DE); SCHLAUGENHAUF, Frank, 88379 Unterwaldhausen (DE); LOBERT, Matthias, 78662 Boesingen-Herrenzimmern (DE)
(74) Vertreter: RavensPAT Patentanwälte Partnerschaft mbB
(86) Internationale Anmeldenummer: PCT/EP2019/069915
(87) Internationale Veröffentlichungsnummer: WO 2020/038682

(56) Entgegenhaltungen:
- EP-A1- 1 674 171
- DE-A1- 102009 038 607
- DE-A1- 102011 122 093
- US-A- 5 042 352

## Beschreibung

Die Erfindung betrifft ein Adapterelement für eine Anbringung eines Matrizenhalters an eine Werkzeugzange.

### Stand der Technik

Werkzeuge zum Fügen müssen regelmäßig komplexen bzw. unterschiedlichen Anforderungen genügen. Werkzeuge sind beispielsweise aus der DE 10 2009 038 607 A1, der EP 1 674 171 A1, der US 5,042,352 A und der DE 10 2011 122 093 A1 bekannt. Für exakt definiert zu durchlaufende Arbeitsprozesse beim Fügen, sind moderne Werkzeuge entsprechend auszulegen, wobei kurze Taktzeiten mit hoher Prozesssicherheit erwünscht sind. Insbesondere ist eine hohe Prozesssicherheit mit vergleichsweise langen Servicezyklen und/oder ein variabler Einsatz der Werkzeuge gewünscht.

Bekannte Fügewerkzeuge umfassen einen Zangenbügel, an welchem auf einer Seite eine Matrize fest angeordnet ist. Die Matrize ist bekannterweise mit dem Zangenbügel fest verschraubt. Bekannte Fügewerkzeuge werden aus diesem Grund für identische Fügeprozesse eingesetzt. Nachteilig daran ist, dass das Fügewerkzeug bzw. der Zangenbügel für einen verschiedenen Fügeprozess vergleichsweise zeitaufwändig anzupassen ist, indem z.B. eine Matrize händisch durch eine andere Matrize am Zangenbügel getauscht wird.

### Aufgabe und Vorteile der Erfindung

Aufgabe der vorliegenden Erfindung ist es, eine Einsatzvariabilität einer Werkzeugzange bei insbesondere kurzen Zykluszeiten und/oder vergleichsweise langen Servicezyklen zu erhöhen.

Die Aufgabe wird durch die Merkmale des unabhängigen Anspruchs 1gelöst. In den abhängigen Ansprüchen sind vorteilhafte und zweckmäßige Ausführungsformen der Erfindung genannt.

Die Erfindung geht von einem Adapterelement für eine Anbringung eines Matrizenhalters an eine Werkzeugzange, insbesondere zur Anbringung eins Matrizenhalters an eine Fügezange, aus.

Beispielsweise wird ein Matrizenhalter an einen Zangenbügel einer Werkzeugzange angeordnet. Der Zangenbügel der Werkzeugzange ist vorteilhafterweise als ein C-Bügel ausgebildet. Die Werkzeugzange ist z.B. als eine Fügezange, eine Clinchzange und/oder eine Prägezange ausgebildet.

Ein Kern der Erfindung ist nun darin zu sehen, dass das Adapterelement ein Montageelement umfasst und das Montageelement dazu ausgebildet ist, den Matrizenhalter anzuordnen, wobei das Adapterelement Montagemittel aufweist, wobei die Montagemittel dazu ausgebildet sind, das Adapterelement an Verbindungsmittel eines Zangenbügels der Werkzeugzange anzuordnen, sodass ein automatisches Anbringen des Adapterelements am Zangenbügel und/oder ein automatisches Lösen vom Zangenbügel realisiert ist. Hierdurch ist ein vergleichsweise kostengünstiges automatisches Wechselsystem zum Wechseln einer Matrize und/oder eines Matrizenhalters einer Werkzeugzange realisiert, wodurch vergleichsweise kurzen Zykluszeiten und/oder vergleichsweise langen Servicezyklen ermöglicht sind.

Das Montageelement des Adapterelements ist vorteilhafterweise dazu ausgebildet, einen insbesondere herkömmlichen Standard-Matrizenhalter der Werkzeugzange anzuordnen. Beispielsweise ist der Standard-Matrizenhalter für den nicht automatischen wechselbaren Einsatz vorhanden. Ein Standard-Matrizenhalter ist beispielsweise dazu ausgebildet, mit einem vorgeschlagenen Adapterelement zusammenzuwirken. Ein Standard-Matrizenhalter ist beispielsweise aus dem Stand der Technik als z.B. ein herkömmlicher Matrizenhalter bereits bekannt. Ein Standard-Matrizenhalter ist beispielsweise mit dem Zangenbügel der Werkzeugzange verschraubbar vorhanden.

Das Adapterelement ist insbesondere als ein Werkzeugzangenadapterelement, z.B. als ein Fügezangenadapterelement ausgebildet.

Vorteilhafterweise ist nur einmalig eine Anpassung der Werkzeugzange, insbesondere des Zangenbügels und/oder des Matrizenhalters notwendig. Beispielsweise sind an der Werkzeugzange, insbesondere dem Zangenbügel Verbindungsmittel, z.B. in Form eines Bolzens in insbesondere bereits am Zangenbügel vorhandene Standard-Verbindungsmittel, z.B. in Form einer Aufnahmen anzubringen, um ein automatisches Anbringen und/oder Lösen des Adapterelements am Zangenbügel zu realisieren. Hierdurch ist ein automatischer Wechsel von Adapterelementen am Zangenbügel und damit von Standard-Matrizenhaltern realisiert. Die Standard-Verbindungsmittel sind beispielsweise zur Anbringung eines Standard-Matrizenhalters am Zangenbügel ausgebildet. Ein Standard-Verbindungsmittel ist beispielsweise als eine Gewindebohrung, insbesondere als eine Sacklochgewindebohrung ausgebildet.

Weiter wird vorgeschlagen, dass das Adapterelement dazu ausgebildet ist, ein automatisches Anbringen des Adapterelements mit daran angeordnetem Matrizenhalter am Zangenbügel und/oder ein automatisches Lösen vom Zangenbügel zu realisieren. Vorteilhafterweise ist am Adapterelement ein Standard-Matrizenhalter fest montierbar, z.B. anschraubbar. Beispielsweise ist der Standard-Matrizenhalter an einem Montageelement, insbesondere an mehreren, z.B. zwei, drei oder vier Montageelementen des Adapterelements anbringbar.

Außerdem erweist es sich von Vorteil, dass
ein Montageelement als ein Element einer Passung, z.B. in Form einer Passbohrung, ausgebildet ist. In einer vorteilhaften Modifikation der Erfindung weist das Adapterelement zwei Montageelemente auf und jedes Montagelement ist als ein Element einer Passung ausgebildet. Beispielsweise sind die Elemente einer Passung der Montageelemente gleich, z.B. identisch vorhanden. Vorteilhafterweise sind insbesondere genau zwei Montageelemente als ein Element einer Passung vorhanden. Denkbar ist auch, dass ein Montageelement als ein Anschlag oder eine Anschlagfläche ausgebildet ist. Auch ist es vorstellbar, dass ein Montageelement als ein Passstift oder ein Bolzen einer Passung vorhanden ist. Bevorzugterweise ist ein Montageelement, insbesondere zwei Montageelemente in Form eines Innengewindes realisiert. Vorteilhafterweise sind zwei Montageelemente in Form eines Elements einer Passung, eines Passstifts oder eines Anschlags ausgebildet und zwei weitere Montageelemente in Form einer Befestigungseinrichtung, wie z.B. einem Innengewinde.

Erfindungsgemäß umfassen die Montagemittel ein Montageorgan, wobei das Montageorgan in Form einer Passbohrung und/oder in Form eines Passstifts vorhanden ist. Beispielsweise umfasst das Adapterelement genau zwei Montageorgane.

Ebenfalls wird vorgeschlagen, dass die Verbindungsmittel des Zangenbügels eine Verbindungsstelle am Zangenbügel und ein Verbindungselement, z.B. einen Passstift, umfassen. Das Verbindungselement, z.B. der Passstift ist beispielsweise an der Verbindungsstelle montierbar.

Die Verbindungsstelle ist beispielsweise als ein Innengewinde vorhanden. Denkbar ist auch, dass die Verbindungsstelle als eine Standard-Verbindungsstelle vorhanden ist. Die Verbindungsmittel umfassen beispielsweise ein Verbindungselement, welches beispielsweise insbesondere zusätzlich zu Standard-Verbindungsmittel, z.B. der Verbindungsstelle am Zangenbügel ausgebildet ist. Ein Standard-Verbindungsmittel, z.B. die Verbindungsstelle ist zum Beispiel zur Anbringung des Standard-Matrizenhalters am Zangenbügel vorhanden.

Das Verbindungselement ist beispielsweise als ein Bolzen und/oder als ein Stift, insbesondere als ein Passstift und/oder als ein Passbolzen vorhanden. Denkbar ist auch, dass das Verbindungselement als ein Element einer Passung ausgebildet ist. Vorstellbar ist, dass das Verbindungselement als ein Anschlag und/oder als eine Passbohrung vorhanden ist. Vorteilhafterweise sind mehrere Verbindungselemente, z.B. zwei, insbesondere genau zwei Verbindungselemente am Zangenbügel vorhanden. Bevorzugterweise ist das Verbindungselement mit der Verbindungsstelle verbindbar vorhanden. Z.B. ist das Verbindungselement an die Verbindungsstelle anschraubbar und/oder einschraubbar ausgebildet.

Vorteilhafterweise ist das Verbindungselement, insbesondere der Passstift auf das Montageorgan der Montagemittel des Adapterelements abgestimmt vorhanden. Hierdurch ist eine Passung, und damit eine Ausrichtung des Adapterelements zum Zangenbügel realisiert. Die Passung besteht vorteilhafterweise aus einem Montageorgan des Adapterelements und einem Verbindungselement des Zangenbügels. Vorteilhafterweise bilden das Adapterelement und der Zangenbügel im montierten Zustand zwei, insbesondere genau zwei Passungen aus.

Für ein automatisches Anbringen des Adapterelements am Zangenbügel umfasst das Adapterelement eine Klemmvorrichtung. Die Klemmvorrichtung ist vorteilhafterweise derart ausgebildet, dass sie im angeordneten Zustand des Adapterelements am Zangenbügel das Adapterelement mit dem Zangenbügel verklemmt, indem die Klemmvorrichtung das Adapterelement, insbesondere ein Montageorgan des Adapterelements, mit dem Zangenbügel, z.B. mit einem Verbindungselement der Verbindungsmitteln des Zangenbügels, verklemmt.

Die Klemmvorrichtung umfasst ein Klemmelement. Das Klemmelement ist beispielsweise stabförmig, insbesondere zylinderförmig vorhanden. Das Klemmelement ist linearbeweglich gelagert am Adapterelement vorhanden. Vorteilhafterweise ist eine Bewegungsrichtung des Klemmelements quer, insbesondere senkrecht zu einer Längserstreckung des Montageorgans, z.B. quer, insbesondere senkrecht zu einer Rotationsachse und/oder Symmetrieachse des Montageorgans vorhanden.

Das Klemmelement ist mittels eines Federelements der Klemmvorrichtung vorgespannt am Adapterelement angeordnet. Beispielsweise ist das Klemmelement entgegen einer Federkraft des Federelements beweglich ausgebildet. Beispielsweise ist das Adapterelement derart ausgestaltet, dass ein externes Mittel, z.B. eine Person, eine Löseorgan einer Aufbewahrungsstation für das Adapterelement und/oder ein Roboterarm durch einen Eingriff am Adapterelement das Klemmelement bewegen kann. Z.B. durch Eindrücken eines Zapfens der Klemmvorrichtung. Vorteilhafterweise wirkt der Zapfen auf das Klemmelement und/oder mit dem Klemmelement. Beispielsweise ist der Zapfen Teil des Klemmelements, z.B. sind die beiden Elemente einstückig vorhanden.

Vorteilhafterweise umfasst das Adapterelement Greiforgane. Die Greiforgane sind beispielsweise schienenartig ausgebildet. Beispielsweise sind die Greiforgane als insbesondere linear verlaufende Einkerbungen am Adapterelement ausgebildet. Beispielsweise sind zwei Greiforgane spiegelsymmetrisch am Adapterelement ausgebildet und angeordnet. Vorteilhafterweise umfasst das Adapterelement ein Fixierungselement, beispielsweise umfasst ein Greiforgan ein Fixierungselement. Das Fixierungselement ist beispielsweise als eine Sacklochbohrung vorhanden. Mittels des Fixierungselements ist das Adapterelement beispielsweise an einer Aufbewahrungsstation durch die Aufbewahrungsstation fixierbar ausgebildet. Vorteilhafterweise umfasst die Aufbewahrungsstation ein Fixierungsorgan, mittels welchem das Adapterelement an der Aufbewahrungsstation fixierbar ist. Beispielsweise greift ein Fixierungsorgan, z.B. ein Stift und/oder ein Bolzen, der Aufbewahrungsstation im angeordneten Zustand des Adapterelements an der Aufbewahrungsstation, z.B. im vom Zangenbügel demontierten Zustand des Adapterelements, am Fixierungselement an und fixiert dadurch das Adapterelement an der Aufbewahrungsstation.

Eine vorteilhafte Ausführungsform der Erfindung ist auch ein Adapterelement für eine Anbringung eines Matrizenhalters an eine Werkzeugzange, beispielsweise zur Anbringung eins Matrizenhalters an eine Fügezange, insbesondere nach einer der vorangegangen beschriebenen Varianten, wobei das Adapterelement ein Montageorgan umfasst und das Montageorgan dazu ausgebildet ist, das Adapterelement an einem Zangenbügel der Werkzeugzange anzuordnen, wobei das Adapterelement Montagemittel aufweist, wobei die Montagemittel dazu ausgebildet sind, den Matrizenhalter am Adapterelement anzuordnen, sodass ein automatisches Anbringen des Matrizenhalters am Adapterelement und/oder ein automatisches Lösen des Matrizenhalters vom Adapterelement ermöglicht ist.

Vorteilhafterweise ist das Montageorgan dazu vorgesehen, das Adapterelement an Standard-Verbindungsmittel eines insbesondere herkömmlichen, beispielsweise aus dem Stand der Technik bekannten Zangenbügels der Werkzeugzange anzuordnen. Das Montageorgan ist als eine Passbohrung vorhanden. Vorteilhafterweise sind zwei oder mehr Montageorgane vorgesehen. Bevorzugterweise ist ein Verbindungselement vorhanden, z.B. in Form eines Passstifts. Vorteilhafterweise greift das Verbindungselement durch die Passbohrung des Adapterelements und verbindet das Adapterelement mit einer Verbindungsstelle des Zangenbügels. Von Vorteil erweist sich, wenn das Verbindungselement mit der Verbindungsstelle fixierbar, z.B. verschaubbar vorhanden ist. Z.B. umfasst die Verbindungsstelle ein Innengewinde und das Verbindungselement ein Außengewinde.

Hierdurch ist das Adapterelement am Zangenbügel ausrichtbar und befestigbar.

Von Vorteil erweist sich auch, dass das Adapterelement derart ausgebildet ist, dass im angeordneten Zustand des Adapterelements am Zangenbügel ein automatisches Anbringen des Matrizenhalters am Adapterelement und/oder ein automatisches Lösen des Matrizenhalters vom Adapterelement ermöglicht ist.

Der Matrizenhalter umfasst vorteilhafterweise Anbindungsmittel, wobei die Anbindungsmittel dazu ausgebildet sind, den Matrizenhalter an Standard-Verbindungsmittel eines Zangenbügels anzubringen. Beispielsweise umfassen die Anbindungsmittel ein Anbindungselement, wobei das Anbindungselement dazu ausgebildet ist, mit den Montagemitteln des Adapterelements zu wirken, sodass ein automatisches Anbringen des Matrizenhalters am Adapterelement und/oder ein automatisches Lösen des Matrizenhalters vom Adapterelement realisierbar ist. Eine derartige Ausführung eines Adapterelements ist insbesondere vorteilhaft für bereits vorhandene Fügezangen, bei welchen eine Anpassung der Werkzeugzange vergleichsweise aufwendig ist. Stattdessen wird z.B. der Matrizenhalter angepasst.

Ein Anbindungselement ist beispielsweise als ein Passstift oder eine Passbohrung ausgebildet. Ein Montagemittel des Adapterelements ist beispielsweise als ein Passstift, als eine Passbohrung, als ein Anschlag und/oder eine Aufnahme ausgebildet. Vorteilhafterweise bilden ein Anbindungselement des Matrizenhalters und ein Montagemittel des Adapterelements eine Passung aus.

Ebenfalls erweist es sich von Vorteil, dass ein Matrizenhalter, welcher zum automatischen Anbringen des Matrizenhalters am Adapterelement und/oder zum automatischen Lösen des Matrizenhalters vom Adapterelement ausgebildet ist, ein Halteelement und/oder ein Positionierungsorgan umfasst.

Ein Positionierungsorgan ist beispielsweise schienenartig ausgebildet. Beispielsweise ist das Positionierungsorgan als insbesondere linear verlaufende Einkerbungen am Matrizenhalter ausgebildet. Beispielsweise sind zwei Positionierungsorgane spiegelsymmetrisch am Matrizenhalter ausgebildet und angeordnet. Vorteilhafterweise umfasst der Matrizenhalter ein Halteelement, beispielsweise umfasst ein Positionierungsorgan ein Halteelement. Das Halteelement ist beispielsweise als eine Sacklochbohrung vorhanden. Mittels des Halteelements ist der Matrizenhalter beispielsweise an einer Aufbewahrungsstation durch die Aufbewahrungsstation fixierbar ausgebildet. Vorteilhafterweise umfasst die Aufbewahrungsstation ein Fixierungsorgan, mittels welchem der Matrizenhalter an der Aufbewahrungsstation fixierbar ist. Beispielsweise greift ein Fixierungsorgan, z.B. ein Stift und/oder ein Bolzen, der Aufbewahrungsstation im vom Adapterelement demontierten Zustand des Matrizenhalters am Halteelement an und fixiert dadurch den Matrizenhalter an der Aufbewahrungsstation.

Auch wird eine weitere Variante in Form eines Matrizenhalters für eine Anbringung an eine Werkzeugzange vorgeschlagen, wobei der Matrizenhalter ausgebildet ist, eine Matrize anzuordnen, wobei der Matrizenhalter Anbindungsmittel zur insbesondere unmittelbaren Anbringung des Matrizenhalters an Verbindungsmittel eines Zangenbügels umfasst, wobei die Anbindungsmittel des Matrizenhalters ein Anbindungselement aufweisen, wobei das Anbindungselement des Matrizenhalters ausgebildet ist, ein automatisches Anbringen des Matrizenhalters am Adapterelement nach einer der vorangegangen genannten Ausführungsvarianten und/oder ein automatisches Lösen des Matrizenhalters vom Adapterelement nach einer der vorangegangen genannten Ausführungsvarianten zu ermöglichen. Ein Anbindungsmittel ist beispielsweise als ein Passstift ausgebildet. Ein Verbindungsmittel des Adapterelements beispielsweise als eine Passbohrung. Vorteilhafterweise umfasst das Adapterelement zwei Passbohrungen. Hierdurch ist eine Ausrichtung des Matrizenhalters relativ zum Adapterelement realisierbar.

Vorstellbar ist weiterhin, dass entweder der Matrizenhalter und/oder das Adapterelement eine Klemmvorrichtung aufweisen. Vorteilhafterweise ist die Klemmvorrichtung dazu ausgebildet, den Matrizenhalter und das Adapterelement im angeordneten Zustand miteinander zu verklemmen. Beispielsweise ist die Klemmvorrichtung wie vorangegangen beschrieben ausgebildet, sodass die Klemmvorrichtung ein, zwei oder mehr Anbindungselemente mit dem Adapterelement, insbesondere mit jeweils einem Montagemittel verklemmt.

Eine alternative Variante ist ein Zangenbügel einer Werkzeugzange, wobei der Zangenbügel eine Verbindungsstelle zur insbesondere unmittelbaren Anbringung eines Matrizenhalters am Zangenbügel umfasst, wobei der Zangenbügel Verbindungsmittel umfasst, wobei die Verbindungsmittel dazu ausgebildet sind, ein automatisches Anbringen des Adapterelements nach einer der vorangegangen genannten Ausführungsvarianten am Zangenbügel und/oder ein automatisches Lösen des Adapterelements nach einer der vorangegangen genannten Ausführungsvarianten vom Zangenbügel zu realisieren.

Eine weitere vorteilhafte Variante der Erfindung ist ein System bestehend aus einem Adapterelement nach einer der vorangegangen genannten Ausführungsvarianten und einem Matrizenhalter, insbesondere nach einer der vorangegangen genannten Ausführungsvarianten und/oder ein System bestehend aus einem Adapterelement nach einer der vorangegangen genannten Ausführungsvarianten und einem Zangenbügel, insbesondere nach einer der vorangegangen genannten Ausführungsvarianten.

Eine vorteilhafte Ausführungsform der Erfindung ist eine Werkzeugzange, insbesondere eine Fügezange, mit einem Adapterelement nach einer der vorangegangen genannten Ausführungsvarianten, einem Matrizenhalter, insbesondere nach einer der vorangegangen genannten Ausführungsvarianten und/oder einem Zangenbügel, insbesondere nach einer der vorangegangen genannten Ausführungsvarianten.

### Beschreibung eines Ausführungsbeispiels

Im Folgenden wird ein Ausführungsbeispiel anhand schematischer Zeichnungen unter Angabe weiterer Einzelheiten und Vorteile näher erläutert.

Es zeigen:
- Figur 1: eine perspektivische Explosionsdarstellung von schräg seitlich vorne oben eines erfindungsgemäßen Adapterelements mit Matrizenhalter und Matrize,
- Figur 2: eine Unteransicht des Adapterelements gemäß Figur 1 im montierten Zustand,
- Figur 3: eine perspektivische Explosionsdarstellung von schräg seitlich vorne oben auf das Adapterelement gemäß Figur 1, Verbindungselemente und einen Zangenbügel und
- Figuren 4 und 5: eine Draufsicht auf eine Aufbewahrungsstation für das Adapterelement in einer Offen- und in einer Schließstellung und
- Figuren 6 und 7: eine perspektivische Ansicht von schräg seitlich vorne oben auf die Aufbewahrungsstation gemäß den Figuren 4 und 5.

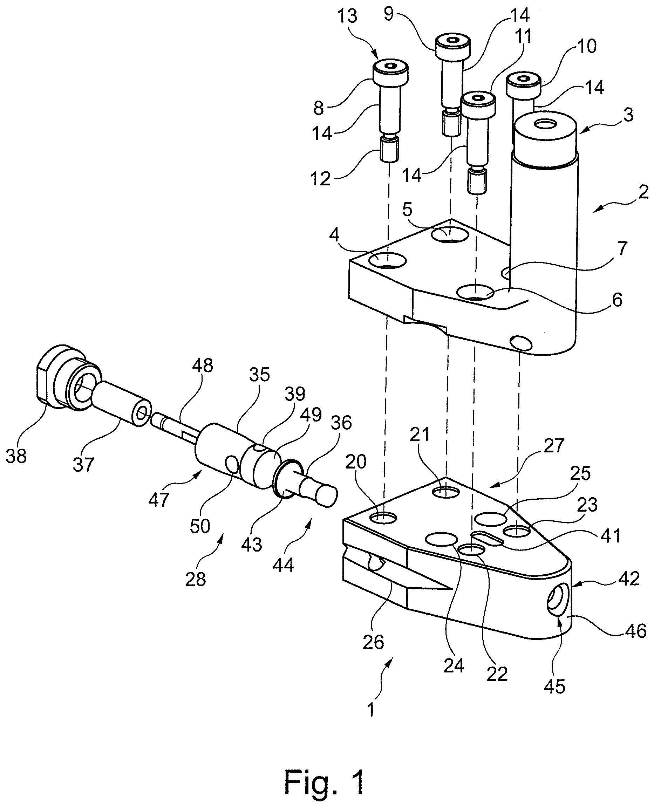

Figur 1 zeigt ein erfindungsgemäßes Adapterelement 1, einen Matrizenhalter 2 und eine Matrize 3. Der Matrizenhalter 2 und die Matrize 3 sind vorteilhafterweise in bekannter Art und Weise ausgebildet.

Der Matrizenhalter 2 umfasst beispielsweise Anbindungsmittel in Form von Durchgangsbohrungen 4 bis 7. An eine der Durchgangsbohrungen 4 bis 7, kann jeweils ein Anbindungselement 8 bis 11 angreifen.

Vorteilhafterweise sind die Anbindungselemente 8 bis 11 in Form von Passstiften bzw. in Form von Passschrauben ausgebildet, welche jeweils an einem ersten Ende ein Außengewinde 12 umfassen und an einem zweiten Ende, welches beabstandet und gegenüberliegend zum ersten Ende vorhanden ist, ein Schraubenkopf 13. Zwischen dem ersten und dem zweiten Ende umfassen die Anbindungselemente 8 bis 11 vorteilhafterweise eine zylindrische Außenform 14. Hierdurch ist die Matrize 3 über den Matrizenhalter 2 relativ zum Adapterelement 1 ausrichtbar.

In bekannter Weise ist der Matrizenhalter 2 mittels der Anbindungselemente 8 bis 11, welche die Durchgangsbohrungen 4 bis 7 durchgreifen, an einer Standard-Verbindungsstelle 29, 30 eines insbesondere bekannten Zangenbügels 31 anordenbar, beispielsweise befestigbar (nicht gezeigt).

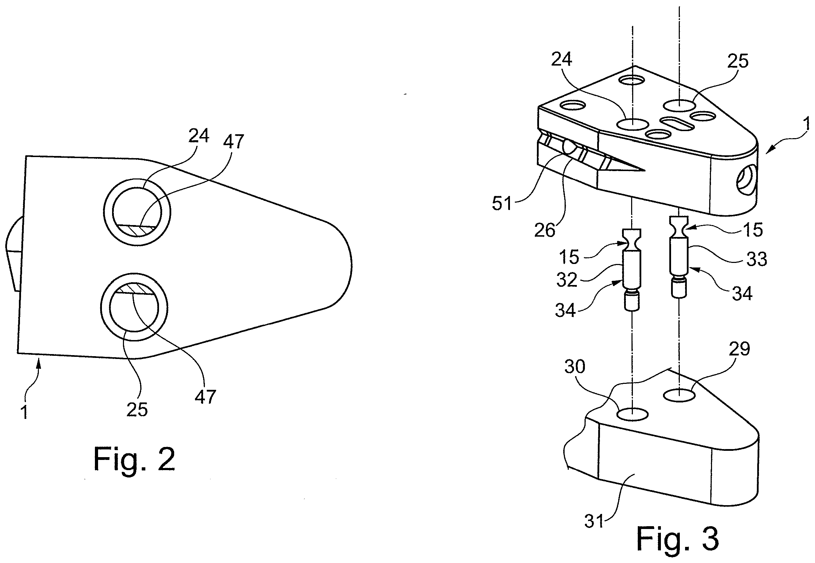

Das Adapterelement 1 umfasst Montagemittel in Form von z.B. vier Sacklochbohrungen 20 bis 23, zwei Montageorgane in Form von Passbohrungen 24, 25, zwei Greiforgane 26, 27 (ein Greiforgan 26 in Figur 1 gezeigt) und z.B. eine Klemmvorrichtung 28 (siehe auch Figur 2).

Die Sacklochbohrungen 20 bis 23 sind beispielsweise identisch ausgebildet. Vorteilhafterweise sind jeweils zwei Sacklochbohrungen 20 bis 23 identisch vorhanden. Vorteilhafterweise umfasst jede Sachlochbohrung 20 bis 23 ein Innengewinde, sodass der Matrizenhalter 2 mittels der Anbindungselemente 8 bis 11 am Adapterelement 1 befestigbar ist. Bevorzugterweise umfassen die Sacklochbohrungen 22, 23 insbesondere zusätzlich zum Innengewinde eine zylindrische Aufnahme, welche als Gegenstück zur Außenform 14 der Anbindungselemente 8 bis 11 ausgebildet ist, sodass die zylindrische Aufnahme mit der Außenform 14 eine Passung bildet.

In Figur 3 ist ein Zangenbügel 31 gezeigt, welcher Verbindungsstellen 29, 30 aufweist. Die Verbindungsstellen 29, 30 sind vorteilhafterweise als Gewindebohrungen vorhanden. An den Verbindungsstellen 29, 30 sind Verbindungselemente in Form von Passstiften 32, 33 befestigbar, z.B. einschraubbar. Die Passstifte 32, 33 besitzen vorteilhafterweise eine zylindrische Außenform 34, welche auf eine zylindrische Innenform der Passbohrungen 24, 25 abgestimmt ist, sodass ein Passstift 32, 33 mit einer Passbohrung 24, 25 eine Passung bildet. Hierdurch ist das Adapterelement 1 relativ zum Zangenbügel 31 ausrichtbar vorhanden. Im Bereich der zylindrischen Außenform 34 umfasst ein Passstift 32, 33 vorteilhafterweise eine umlaufende Einkerbung 15. Die Einkerbung 15 ist insbesondere in einem Querschnitt betrachtet beispielsweise doppelkegelartig oder torusartig ausgebildet. Beispielsweise ist die Einkerbung 15 als eine torusartige Ausnehmung der zylindrischen Außenform 34 vorhanden.

Die Klemmvorrichtung 28 umfasst ein Klemmelement 35, ein zapfenartiges Bedienelement 36, ein Federelement 37 und ein Sicherungsorgan 38. Das Klemmelement 35 ist beispielsweise zylinderförmig ausgebildet. Das Klemmelement 35 umfasst eine Ausnehmung 39, in welche im montierten Zustand der Klemmvorrichtung 28 am Adapterelement 1 ein Sicherungsstift eingreifend anordenbar ist. Der Sicherungsstift ist abstehend an der Ausnehmung 39 befestigbar, z.B. ansteckbar, sodass der Sicherungssstift im angeordneten Zustand am Adapterelement in einer Kulisse 41 des Adapterelements 1 geführt vorhanden ist. Hierdurch ist eine Verdrehsicherung des Klemmelements 35 realisiert.

Das Adapterelement 1 umfasst eine Durchgangsbohrung 42, an bzw. in welche die Elemente der Klemmvorrichtung 28 einsetzbar bzw. anordenbar sind. Die Durchgangsbohrung 42 ist quer, insbesondere senkrecht zu den Sacklochbohrungen 20 bis 23 und/oder zu den Passbohrungen 24, 25 ausgerichtet. Die Durchgangsbohrung schneidet die Passbohrungen 24, 25, sodass ein in der Durchgangsbohrung vorhandenes Element in die Passbohrung 24, 25 hineinragen kann. Die Durchgangsbohrung 42 umfasst vorteilhafterweise einen Anschlag, an welchem das Bedienelement 36 mit einer Anschlagfläche 43 aufgrund einer Federkraft des Federelements 37 im montierten Zustand ansteht. Steht das Bedienelement 36 mit seiner Anschlagfläche 43 am Anschlag der Durchgangsbohrung 42 an, so ist ein Ende 44 des Bedienelements bündig oder zumindest annähernd bündig mit einer Öffnungsfläche 45 der Durchgangsbohrung 42. Vorteilhafterweise steht das Bedienelement 36 im anstehenden Zustand am Anschlag der Durchgangsbohrung nicht über eine Außenfläche 46 des Adapterelements 1 über.

Das Sicherungsorgan 38 ist im angeordneten Zustand mit dem Adapterelement 1 verschraubt vorhanden (siehe auch Figur 2). Das Sicherungsorgan 38 ist vorteilhafterweise derart vorhanden, sodass das Sicherungsorgan 38 im montierten Zustand der Klemmvorrichtung 28 verbleibende Elemente relativ zum Adapterelement 1 festlegt. Hierdurch bildet das Sicherungsorgan 38 eine Anschlagfläche für das Federelement 37 im montierten Zustand am Adapterelement 1. Das Federelement 37 ist beispielsweise als eine Schraubenfeder ausgebildet. Das Klemmelement 35 umfasst neben seinem zylinderförmigen Grundkörper 47 ein in einer Zylinderachse des Grundkörpers 47 sich erstreckendes stiftartiges Führungselement 48. Das Führungselement 48 ist vorteilhafterweise im angeordneten Zustand innerhalb des Federelements 37 geführt vorhanden. Hierdurch ist im angeordneten Zustand der Klemmvorrichtung 28 am Adapterelement 1 das Führungselement 48 entlang einer Längsachse und/oder Symmetrieachse der Durchgangsbohrung 42 entgegen der Federkraft des Federelements 37 bewegbar vorhanden.

Im anstehenden Zustand des Bedienelements 36 am Anschlag der Durchgangsöffnung 42 steht das Klemmelement 35 mit einer Stirnfläche 49 am Bedienelement 36 an, sodass das Klemmelement 35 mit einem Teil seines Grundkörpers 47 in die Passbohrungen 24, 25 hineinragt. Hierdurch kann die Klemmvorrichtung 28 im angeordneten Zustand des Adapterelements 1 am Zangenbügel 31, das Adapterelement 1 mit den Passstiften 32, 33 insbesondere positionsgenau verklemmen.

Ein Lösen des Adapterelements 1 vom Zangenbügel 31 im angeordneten Zustand wird dadurch erreicht, dass am Grundkörper 47 des Klemmelements 35 Aussparungen 50 ausgebildet sind. Die Aussparungen 50 sind vorteilhafterweise zylinderförmig vorhanden. Bevorzugterweise entspricht eine Aussparungsfläche der Aussparung 50 einer Teilfläche der zylindrischen Innenform der Passbohrung 24, 25. Drückt nun ein externes Element entgegen der Federkraft des Federelements 37 durch die Öffnungsfläche 45 auf das Ende 44 des Bedienelements 36 kann das Klemmelement 35 in Richtung Sicherungsorgan 38 bewegt werden, sodass die Aussparung 50 vorteilhafterweise bündig mit der zylindrischen Innenform der Passbohrung 24, 25 in Anlage kommt. Hierdurch ist der Passstift 32, 33 in der Passbohrung 24, 25 freigegeben, sodass das Adapterelement 1 in Richtung einer Erstreckung einer Symmetrieachse einer Passbohrung 24, 25 vom Zangenbügel 31 entfernbar, z.B. abnehmbar ist.

Das Adapterelement 1 umfasst außerdem vorteilhafterweise, insbesondere an einem Greiforgan 26, ein Fixierungselement 51. Das Fixierungselement 51 ist beispielsweise als ein Sackloch ausgebildet. Das Fixierungselement 51, insbesondere das Sackloch, vorteilhafterweise eine Symmetrieachse des Fixierungselements 51, erstreckt sich beispielsweise quer, insbesondere senkrecht zur Symmetrieachse der Durchgangsbohrung 42 und quer, insbesondere senkrecht zu Symmetrieachse der Passbohrungen 24, 25.

Das Greiforgan 26 ist beispielsweise als eine insbesondere linear verlaufende Einkerbung ausgebildet. Die Einkerbung ist beispielsweise V-förmig vorhanden.

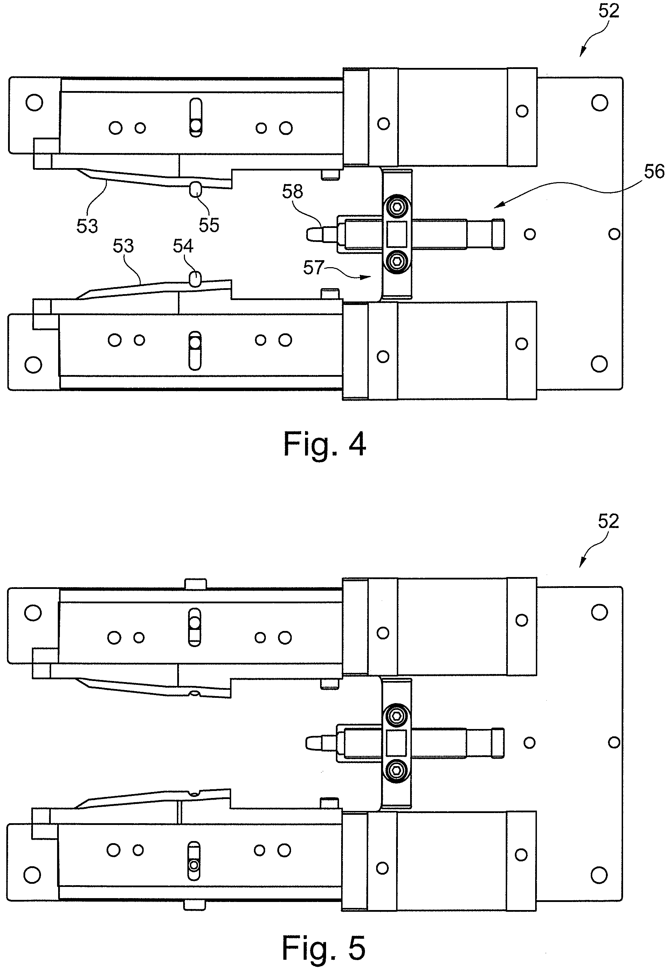

In den Figuren 4 bis 7 ist eine erfindungsgemäße Aufbewahrungsstation 52 gezeigt. Die Aufbewahrungsstation 52 umfasst Greifelemente 53, welche vorteilhafterweise schienenartig ausgebildet sind. Die Greifelemente 53 greifen im angeordneten Zustand des Adapterelements 1 an die Aufbewahrungsstation 52 vorteilhafterweise in die Greiforgane 26, 27 des Adapterelements 1 ein. Weiter umfasst die Aufbewahrungsstation 52 stiftartige Fixierungsorgane 54, 55, mittels welchen das Adapterelement 1 im angeordneten Zustand an der Aufbewahrungsstation 52 positionsfest fixierbar ist. Auch umfasst die Aufbewahrungsstation 52 einen Abstandssensor 56, einen Zangenbügeldetektor 57 und ein Eingreifelement 58.

Ein Ablegen des Adapterelements 1 an der Aufbewahrungsstation 52 erfolgt wie folgt:
In einem ersten Schritt fährt der Zangenbügel 31 mit dem Adapterelement 1 an die Aufbewahrungsstation 52 heran. Der Zangenbügel 31 ist hierbei vorteilhafterweise mittels eines Roboterarms (nicht gezeigt) bewegbar vorhanden, während die Aufbewahrungsstation 52 positionsfest angeordnet ist. Beim Heranfahren wird das Adapterelement 1 mit den Greiforganen auf die Greifelemente 53 aufgeschoben. Hierbei detektiert zum einen der Abstandssensor 56 einen Abstand des Adapterelements 1 zum Sensor und zum anderen der Zangenbügeldetektor 57 ein Vorhandensein des Zangenbügels 31. Das Adapterelement 1 wird hierbei durch den Zangenbügel 31 bzw. den Roboterarm, z.B. bis zu einem Anschlag, auf die Greifelemente 53 aufgeschoben, sodass das Eingreifelement 58 in Anlage mit dem Ende 44 des Bedienelements 36 kommt und das Bedienelement 36 eindrückt. Hierdurch gibt das Klemmelement 35 die Passstifte 32, 33 des Zangenbügels 1 frei.

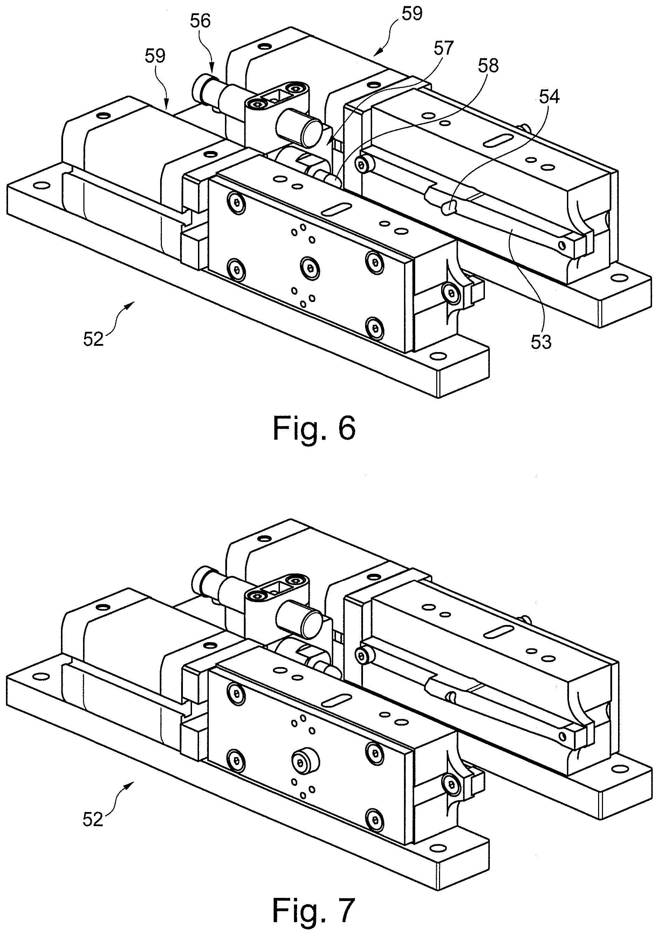

Anschließend verriegelt die Aufbewahrungsstation 52 mittels der Fixierungsorgane 54, 55 das Adapterelement 1 an der Aufbewahrungsstation 52, indem die Fixierungsorgane 54, 55 in eine eingreifende und damit verriegelnde Position mit dem Fixierungselement 51 des Adapterelements 1 mittels einer Bewegungsvorrichtung 59 bewegt werden. In den Figuren 5 und 7 sind die Fixierungsorgane 54, 55 der Aufbewahrungsstation 52 in einer entriegelten Position dargestellt und in den Figuren 4 und 6 in der verriegelten Position.

Ist das Adapterelement 1 an der Aufbewahrungsstation 52 verriegelt vorhanden, bewegt sich der Zangenbügel 31 anschließend nach unten, in Richtung der Symmetrieachse der Passbohrungen 24, 25, sodass die Passstifte 32, 33 aus den Passbohrungen 24, 25 heraus bewegt werden. Hierdurch ist der Zangenbügel 31 frei, ein weiteres Adapterelement 1 mit einem daran angeordneten gleichen oder anderen Matrizenhalter und/oder einer daran angeordneten gleichen oder anderen Matrize aufzunehmen.

**Bezugszeichenliste**

| | | | |
|---|---|---|---|
| 1 | Adapterelement | 32 | Passstift |
| 2 | Matrizenhalter | 33 | Passstift |
| 3 | Matrize | 34 | Außenform |
| 4 | Durchgangsbohrung | 35 | Klemmelement |
| 5 | Durchgangsbohrung | 36 | Bedienelement |
| 6 | Durchgangsbohrung | 37 | Federelement |
| 7 | Durchgangsbohrung | 38 | Sicherungsorgan |
| 8 | Anbindungselement | 39 | Ausnehmung |
| 9 | Anbindungselement | 41 | Kulisse |
| 10 | Anbindungselement | 42 | Durchgangsbohrung |
| 11 | Anbindungselement | 43 | Anschlagfläche |
| 12 | Außengewinde | 44 | Ende |
| 13 | Schraubenkopf | 45 | Öffnungsfläche |
| 14 | Außenform | 46 | Außenfläche |
| 15 | Einkerbung | 47 | Grundkörper |
| 20 | Sacklochbohrung | 48 | Führungselement |
| 21 | Sacklochbohrung | 49 | Stirnfläche |
| 22 | Sacklochbohrung | 50 | Aussparung |
| 23 | Sacklochbohrung | 51 | Fixierungselement |
| 24 | Passbohrung | 52 | Aufbewahrungsstation |
| 25 | Passbohrung | 53 | Greifelemente |
| 26 | Greiforgan | 54 | Fixierungsorgan |
| 27 | Greiforgan | 55 | Fixierungsorgan |
| 28 | Klemmvorrichtung | 56 | Abstandssensor |
| 29 | Verbindungsstelle | 57 | Zangenbügeldetektor |
| 30 | Verbindungsstelle | 58 | Eingreifelement |
| 31 | Zangenbügel | 59 | Bewegungsvorrichtung |

## Patentansprüche

1. Adapterelement (1) für eine Anbringung eines Matrizenhalters (2) an eine Werkzeugzange, insbesondere zur Anbringung eins Matrizenhalters (2) an eine Fügezange, **dadurch gekennzeichnet, dass** das Adapterelement (1) ein Montageelement (20 - 23) umfasst und das Montageelement (20 - 23) dazu ausgebildet ist, den Matrizenhalter (2) anzuordnen, wobei das Adapterelement (1) Montagemittel (24, 25) aufweist, wobei die Montagemittel dazu ausgebildet sind, das Adapterelement (1) an Verbindungsmittel (32) eines Zangenbügels (31) der Werkzeugzange anzuordnen, sodass ein automatisches Anbringen des Adapterelements (1) am Zangenbügel (31) und/oder ein automatisches Lösen vom Zangenbügel (31) realisiert ist, wobei die Montagemittel (24, 25) ein Montageorgan (24, 25) umfassen, wobei das Montageorgan (24, 25) in Form einer Passbohrung (24) vorhanden ist, wobei das Adapterelement (1) eine Klemmvorrichtung (28) für das automatische Anbringen des Adapterelements (1) am Zangenbügel (31) umfasst, wobei die Klemmvorrichtung (28) ein linearbeweglich am Adapterelement (1) gelagertes Klemmelement (35) aufweist, wobei das Klemmelement (35) mittels eines Federelements (37) der Klemmvorrichtung (28) am Adapterelement (1) vorgespannt angeordnet ist, wobei das Klemmelement (35) eine Ausnehmung (39) aufweist, an welcher ein Sicherungsstift abstehend angeordnet ist, wobei die Klemmvorrichtung (1) ein zapfenartiges Bedienelement (36) und ein Sicherungsorgan (38) umfasst, wobei das Adapterelement (1) eine Kulisse (41) aufweist und der Sicherungsstift in der Kulisse (41) geführt vorhanden ist, wodurch das Klemmelement (35) gegen ein Verdrehen um seine lineare Bewegungsachse gesichert ist, wobei das Adapterelement (1) eine Durchgangsbohrung (42) aufweist, an welcher die Klemmvorrichtung (28) angeordnet ist, wobei die Durchgangsbohrung (42) quer zu der Passbohrung (24) ausgerichtet ist und die Passbohrung (24) schneidet, wobei das Klemmelement (35) der Klemmvorrichtung (1) in die Passbohrung (24) hineinragt, sodass die Klemmvorrichtung (28) im angeordneten Zustand des Adapterelements (1) am Zangenbügel (31) das Adapterelement (1) mit einem Verbindungselement (32) der Verbindungsmitteln des Zangenbügels (31) positionsgenau verklemmen kann.

2. Adapterelement (1) für eine Anbringung eines Matrizenhalters (2) an eine Werkzeugzange nach dem vorangegangenen Anspruch 1, **dadurch gekennzeichnet, dass** das Adapterelement (1) dazu ausgebildet ist, ein automatisches Anbringen des Adapterelements (1) mit daran angeordnetem Matrizenhalter (2) am Zangenbügel (31) und/oder ein automatisches Lösen vom Zangenbügel (31) zu realisieren.

3. Adapterelement (1) für eine Anbringung eines Matrizenhalters (2) an eine Werkzeugzange nach einem der vorangegangenen Ansprüche, **dadurch gekennzeichnet, dass** das Adapterelement (1) zwei Montageelemente (22, 23) aufweist und jedes Montagelement (22, 23) als ein Element einer Passung ausgebildet ist.

4. System bestehend aus einem Adapterelement (1) nach einem der vorangegangenen Ansprüche 1 bis 3 und einem Zangenbügel (31).

5. System nach dem vorangegangenen Anspruch 4, wobei der Zangenbügel (31) eine Verbindungsstelle (29, 30) zur insbesondere unmittelbaren Anbringung eines Matrizenhalters (2) am Zangenbügel (31) umfasst, wobei der Zangenbügel (31) Verbindungsmittel (32, 33) umfasst, wobei die Verbindungsmittel (32, 33) dazu ausgebildet sind, ein automatisches Anbringen des Adapterelements (1) am Zangenbügel (31) und/oder ein automatisches Lösen des Adapterelements (1) vom Zangenbügel (31) zu realisieren.

6. System nach dem vorangegangenen Anspruch 5, wobei die Verbindungsmittel des Zangenbügels (31) eine Verbindungsstelle (30, 29) am Zangenbügel (31) und einen Passstift (33, 34) umfassen, wobei der Passstift (33, 34) an die Verbindungsstelle (30, 29) montiert ist.

7. System bestehend aus einem Adapterelement (1) nach einem der vorangegangenen Ansprüche 1 bis 3 und einem Matrizenhalter (2).

8. Werkzeugzange, insbesondere Fügezange, mit einem Adapterelement (1) nach einem der vorangegangenen Ansprüche 1 bis 3 und einem Matrizenhalter (2).

9. Aufbewahrungsstation (52) mit einem Adapterelement (1) nach einem der vorangegangenen Ansprüche 1 bis 3, **dadurch gekennzeichnet, dass** die Aufbewahrungsstation (52) ein Fixierungsorgan (54, 55) umfasst, mittels welchem das Adapterelement (1) an der Aufbewahrungsstation (52) fixierbar ist.

## Claims

1. Adapter element (1) for attaching a die holder (2) to a tool clamp, in particular for attaching a die holder (2) to a joining clamp, **characterized in that** the adapter element (1) comprises a mounting element (20 - 23), and the mounting element (20 - 23) is designed to arrange the die holder (2), wherein the adapter element (1) has mounting means (24, 25), wherein the mounting means are designed to arrange the adapter element (1) on connecting means (32) of a clamp bow (31) of the tool clamp, with the result that automatic attachment of the adapter element (1) to the clamp bow (31) and/or automatic release from the clamp bow (31) are/is realized, wherein the mounting means (24, 25) comprise a mounting member (24, 25), wherein the mounting member (24, 25) is in the form of a locating bore (24), wherein the adapter element (1) comprises a clamping device (28) for the automatic attachment of the adapter element (1) to the clamp bow (31), wherein the clamping device (28) has a clamping element (35) which is mounted on the adapter element (1) in a linearly movable manner, wherein the clamping element (35) is arranged so as to be preloaded on the adapter element (1) by means of a spring element (37) of the clamping device (28), wherein the clamping element (35) has an aperture (39) on which a securing pin is arranged in a projecting manner, wherein the clamping device (1) comprises a spigot-like operating element (36) and a securing member (38), wherein the adapter element (1) has a slotted guide (41) and the securing pin is guided in the slotted guide (41), as a result of which the clamping element (35) is secured against rotation about its linear movement axis, wherein the adapter element (1) has a through-bore (42) on which the clamping device (28) is arranged, wherein the through-bore (42) is oriented transversely with respect to the locating bore (24) and intersects the locating bore (24), wherein the clamping element (35) of the clamping device (1) projects into the locating bore (24) such that, in the state in which the adapter element (1) is arranged on the clamp bow (31), the clamping device (28) can clamp the adapter element (1) with a connecting element (32) of the connecting means of the clamp bow (31) in a positionally accurate manner.

2. Adapter element (1) for attaching a die holder (2) to a tool clamp according to the preceding Claim 1, **characterized in that** the adapter element (1) is designed to realize automatic attachment of the adapter element (1), with die holder (2) arranged thereon, to the clamp bow (31) and/or automatic release from the clamp bow (31).

3. Adapter element (1) for attaching a die holder (2) to a tool clamp according to either of the preceding claims, **characterized in that** the adapter element (1) has two mounting elements (22, 23) and each mounting element (22, 23) is designed as an element of a locating fit.

4. System consisting of an adapter element (1) according to one of the preceding Claims 1 to 3 and of a clamp bow (31).

5. System according to the preceding Claim 4, wherein the clamp bow (31) comprises a connecting point (29, 30) for, in particular direct, attachment of a die holder (2) to the clamp bow (31), wherein the clamp bow (31) comprises connecting means (32, 33), wherein the connecting means (32, 33) are designed to realize automatic attachment of the adapter element (1) to the clamp bow (31) and/or automatic release of the adapter element (1) from the clamp bow (31).

6. System according to the preceding Claim 5, wherein the connecting means of the clamp bow (31) comprise a connecting point (30, 29) on the clamp bow (31) and a locating pin (33, 34), wherein the locating pin (33, 34) is mounted onto the connecting point (30, 29).

7. System consisting of an adapter element (1) according to one of the preceding Claims 1 to 3 and of a die holder (2).

8. Tool clamp, in particular joining clamp, having an adapter element (1) according to one of the preceding Claims 1 to 3 and a die holder (2).

9. Storage station (52) having an adapter element (1) according to one of the preceding Claims 1 to 3, **characterized in that** the storage station (52) comprises a fixing member (54, 55) by means of which the adapter element (1) can be fixed at the storage station (52).

## Revendications

1. Élément d'adaptation (1) destiné au montage d'un support de matrice (2) sur une pince pour outil, en particulier pour le montage d'un support de matrice (2) sur une pince de jonction, **caractérisé en ce que** l'élément d'adaptation (1) comprend un élément d'assemblage (20 - 23) et l'élément d'assemblage (20 - 23) est conçu pour agencer le support de matrice (2), l'élément d'adaptation (1) présentant des moyens d'assemblage (24, 25), les moyens d'assemblage étant conçus pour agencer l'élément d'adaptation (1) sur des moyens de liaison (32) d'une branche de pince (31) de la pince pour outil, de manière à réaliser un montage automatique de l'élément d'adaptation (1) sur la branche de pince (31) et/ou un détachement automatique à partir de la branche de pince (31), les moyens d'assemblage (24, 25) comprenant un organe d'assemblage (24, 25), l'organe d'assemblage (24, 25) se présentant sous la forme d'un alésage ajusté (24), l'élément d'adaptation (1) comprenant un dispositif de serrage (28) pour le montage automatique de l'élément d'adaptation (1) sur la branche de pince (31), le dispositif de serrage (28) présentant un élément de serrage (35) monté mobile linéairement sur l'élément d'adaptation (1), l'élément de serrage (35) étant disposé de manière précontrainte sur l'élément d'adaptation (1) au moyen d'un élément ressort (37) du dispositif de serrage (28), l'élément de serrage (35) présentant un évidement (39) sur lequel est disposée une goupille de blocage en saillie, le dispositif de serrage (1) comprenant un élément d'actionnement (36) en forme de goupille et un organe de blocage (38), l'élément d'adaptation (1) présentant un guidage à fente (41) et la goupille de blocage étant guidée dans le guidage à fente (41), ce par quoi l'élément de serrage (35) est bloqué en rotation autour de son axe de déplacement linéaire, l'élément d'adaptation (1) présentant un alésage traversant (42) sur lequel est disposé le dispositif de serrage (28), l'alésage traversant (42) étant orienté transversalement à l'alésage ajusté (24) et coupant l'alésage ajusté (24), l'élément de serrage (35) du dispositif de serrage (1) faisant saillie dans l'alésage ajusté (24), de telle sorte que, dans l'état agencé de l'élément d'adaptation (1) sur la branche de pince (31), le dispositif de serrage (28) peut serrer l'élément d'adaptation (1) en une position précise avec un élément de liaison (32) des moyens de liaison de la branche de pince (31).

2. Élément d'adaptation (1) pour le montage d'un support de matrice (2) sur une pince pour outil selon la revendication 1 précédente, **caractérisé en ce que** l'élément d'adaptation (1) est conçu pour réaliser un montage automatique de l'élément d'adaptation (1) avec le support de matrice (2) disposé sur celui-ci sur la branche de pince (31) et/ou un détachement automatique de la branche de pince (31).

3. Élément d'adaptation (1) pour le montage d'un support de matrice (2) sur une pince pour outil selon l'une quelconque des revendications précédentes, **caractérisé en ce que** l'élément d'adaptation (1) présente deux éléments d'assemblage (22, 23) et chaque élément d'assemblage (22, 23) est réalisé sous la forme d'un élément d'ajustement.

4. Système constitué d'un élément d'adaptation (1) selon l'une quelconque des revendications 1 à 3 précédentes et d'une branche de pince (31).

5. Système selon la revendication 4, dans lequel la branche de pince (31) comprend un emplacement de liaison (29, 30) pour le montage en particulier direct d'un support de matrice (2) sur la branche de pince (31), la branche de pince (31) comprenant des moyens de liaison (32, 33), les moyens de liaison (32, 33) étant conçus pour réaliser un montage automatique de l'élément d'adaptation (1) sur la branche de pince (31) et/ou un détachement automatique de l'élément d'adaptation (1) à partir de la branche de pince (31).

6. Système selon la revendication 5 précédente, dans lequel les moyens de liaison de la branche de pince (31) comprennent un emplacement de liaison (30, 29) sur la branche de pince (31) et une goupille d'ajustement (33, 34), la goupille d'ajustement (33, 34) étant montée sur l'emplacement de liaison (30, 29).

7. Système constitué d'un élément d'adaptation (1) selon l'une quelconque des revendications 1 à 3 précédentes et d'un support de matrice (2).

8. Pince pour outil, en particulier pince de jonction, comportant un élément d'adaptation (1) selon l'une quelconque des revendications 1 à 3 précédentes et un support de matrice (2).

9. Poste de stockage (52) comprenant un élément d'adaptation (1) selon l'une quelconque des revendications 1 à 3 précédentes, **caractérisé en ce que** le poste de stockage (52) comprend un organe de fixation (54, 55) au moyen duquel l'élément d'adaptation (1) peut être fixé au poste de stockage (52).
